# EUROPÄISCHE PATENTANMELDUNG

(11) **EP 1 884 665 A2**
(43) Veröffentlichungstag der Anmeldung: **06.02.2008**
(21) Anmeldenummer: 07014838.2
(22) Anmeldetag: 27.07.2007
(51) Int. Cl.: F04D 7/04

(54) **Biogasanlagen-Förderpumpe zur Förderung pumpfähiger Biomasse in einer Biogasanlage**

(30) Priorität: 28.07.2006 DE 102006035743
(71) Anmelder: Apfelböck Ingenieurbüro GmbH, 94405 Landau/ Isar (DE)
(72) Erfinder: Bürger, Adam, 83527 Haag (DE)
(74) Vertreter: Neubauer, Hans-Jürgen

(57) **Zusammenfassung**

Die Erfindung betrifft eine Biogasanlagen-Förderpumpe (1) zur Förderung von pumpfähiger Biomasse in einer Biogasanlage, die ein torusförmiges Pumpengehäuse (6) aufweist. Weiter ist ein koaxial zum Pumpengehäuse (6) liegendes Pumpenlaufrad (7) vorgesehen, das mit einem inneren Laufradteil in dem Pumpengehäuse (6) aufgenommen ist. Eine den Pumpeneingang bildende Laufradöffnung (9) des Pumpengehäuses (6), ermöglicht, dass die Biomasse bei einer Laufraddrehung in die Laufradöffnung (9) des Pumpengehäuses (6) gezogen wird, wobei ein etwa tangentialer Pumpenausgang (10) am torusförmigen Pumpengehäuse (6) vorgesehen ist sowie eine antreibbare Pumpenwelle (20), die mit dem Pumpenlaufrad (7) verbunden ist. Erfindungsgemäß liegt die Laufradöffnung (9) in der Funktionsstellung der Förderpumpe (1) oben, wobei das Pumpengehäuse (6) auf der Seite der Laufradöffnung (9) mit einem Ansaugschacht (13) versehen ist, der sich von dem Pumpengehäuse (6) ausgehend nach oben erstreckt und der die Laufradöffnung (9) domförmig umgibt. Die Pumpenwelle (20) ist im vorgegebenen Abstand zum Pumpengehäuse (6) gasdicht durch eine Wand (18) des Ansaugschachtes (13) geführt. Der Ansaugschacht (13) weist wenigstens eine Einlassöffnung (31) für die zu pumpende Biomasse (41) auf, die in der Funktionsstellung der Förderpumpe (1) in Schachtrichtung gesehen oberhalb der Laufradöffnung (9) liegt.

## Beschreibung

Die Erfindung betrifft eine Biogasanlagen-Förderpumpe zur Förderung pumpfähiger Biomasse in einer Biogasanlage nach dem Oberbegriff des Anspruchs 1.

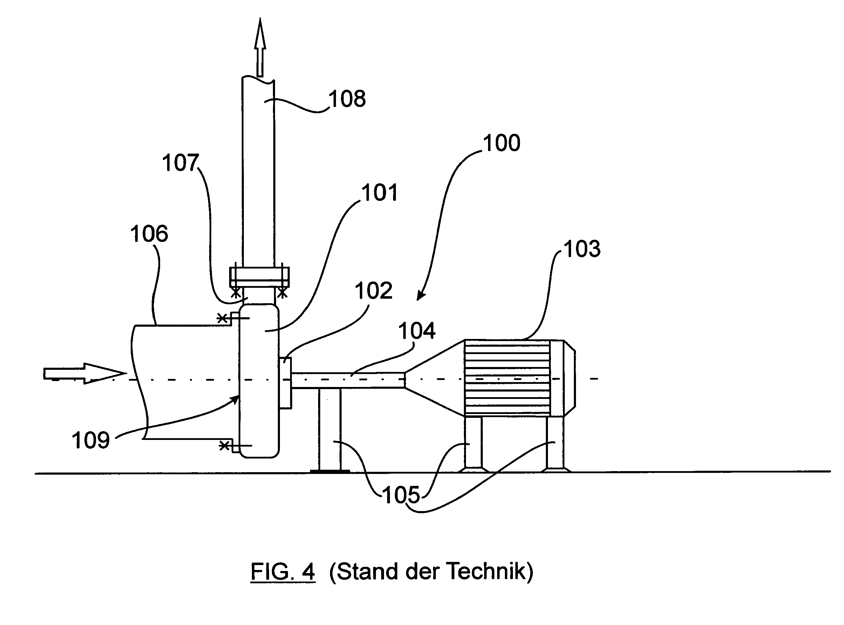

Biogasanlagen weisen wenigstens einen Fermenterbehälter auf, in dessen Innerem Biomasse, insbesondere organische Feststoffe und dergleichen, anaerob vergoren werden. Die vergorene Biomasse wird anschließend mittels Förderpumpen aus dem Fermenterbehälter ausgebracht und z. B. in einen Nachfermenter oder in ein sog. Endlager gepumpt. Die Förderpumpen bilden dabei Bestandteil einer außerhalb der Behälter angeordneten Pumpenstation, in der die Förderpumpen trocken aufgestellt werden und über entsprechende Rohrleitungen mit den Behältern verbunden sind. Eine gattungsgemäße Biogasanlage mit einer herkömmlichen Förderpumpe zur Förderung von pumpfähiger Biomasse ist beispielhaft und schematisch in der Fig. 4 dargestellt. In dieser Fig. 4 weist die Förderpumpe 100 ein torusförmiges Pumpengehäuse 101 auf, in dem ein hier nicht im Detail dargestelltes, koaxial zum Pumpengehäuse 101 liegendes Pumpenlaufrad aufgenommen ist, das mit einem inneren Laufradteil in dem Pumpengehäuse 101 aufgenommen ist und das über ein äußeres Laufradteil im Bereich eines Wellenlagers 102 mit einer Pumpenwelle des Antriebsmotors 103 drehübertragend verbunden ist. Die Pumpenwelle ist hier ebenso wie das äußere Laufradteil nicht gezeigt, da diese innerhalb des Wellenlagers 102 bzw. eines Wellenrohres 104, die jeweils ortsfest angeordnet sind, verlaufen. Die Förderpumpe 100 ist über Stützfüße 105 am Boden als Aufstandsfläche abgestützt. Das torusförmige Pumpengehäuse 101 weist auf der dem Wellenlager 102 gegenüberliegenden Seite eine Laufradöffnung 109 auf, an der über eine Flanschverbindung eine Rohrleitung 106 von einem Fermenterbehälter kommend angeflanscht ist. Das torusförmige Pumpengehäuse 101 weist ferner noch einen tangentialen Pumpenausgang 107 auf, an den eine Rohrleitung 108 zu einem Nachfermenter angeschlossen ist. Im Betrieb saugt diese trocken aufgestellte Förderpumpe 100 Biomasse von dem Fermenterbehälter über die Rohrleitung 106 von unten her an und pumpt diese über den tangentialen Pumpenausgang 107 und die Rohrleitung 108 zum Nachfermenter. Bei derartigen Förderpumpen besteht die Gefahr, dass sich im Pumpengehäuse eine größere Menge Gas ansammelt, die nach oben steigt und gegebenenfalls den Förderstrom der Pumpe unterbricht. Diese Gefahr wird insbesondere dadurch erhöht, dass in Biogasanlagen mittlerweile vermehrt solche Biomasse eingesetzt wird, die eine verstärkte Neigung zum Gasen aufweisen. Dadurch kann es zu Unregelmäßigkeiten im Betrieb kommen, welche unerwünscht sind und nur mit einem erheblichen Kostenaufwand beseitigt werden können.

Weiter ist aus der DE 297 08 339 U1 eine Förderpumpe für Biomasse bekannt, die als Tauchpumpe ausgebildet in das zu fördernde Medium Biomasse eingebracht wird. Auch diese nass aufgestellte Förderpumpe weist ein torusförmiges Pumpengehäuse auf, mit einem koaxial zum Pumpengehäuse liegenden Pumpenlaufrad, das mit einem inneren Laufradteil in das Pumpengehäuse hineinragt und das mit einer äußeren Laufradschnecke aus dem Pumpengehäuse herausragt, so dass bei einer Laufraddrehung von der äußeren Laufradschnecke erfassbare Materialien in die Laufradöffnung des Pumpengehäuses als Pumpeneingang gezogen und gedrängt werden. Die äußere Laufradschnecke ist hier teilweise von einem schalenförmigen Schneckentrog umfasst und stellt insbesondere einen relativ breiten Schneckentrogeingang zur Verfügung, der sich zum Schneckentrogausgang hin stark verjüngt, wobei am Schneckentrogausgang Schlagleisten angeordnet sein können. Mit einer derartigen nass aufgestellten Förderpumpe lassen sich auch stark verzopfende und schwierig zu pumpende Biomasse-Materialien mit guten Pumpergebnissen fördern.

Aufgabe der Erfindung ist es, eine Förderpumpe für eine Biogasanlage zur Verfügung zu stellen, die insbesondere im trocken aufgestellten Zustand eine hohe Betriebssicherheit beim Pumpvorgang bietet.

Diese Aufgabe wird gelöst mit den Merkmalen des Anspruchs 1.

Gemäß Anspruch 1 liegt die Laufradöffnung des Pumpengehäuses im montierten Zustand (= Funktionsstellung) der Förderpumpe, oben, d. h. befindet sich auf der dem Boden bzw. der Aufstandsfläche gegenüberliegenden Seite des Pumpengehäuses wobei das torusförmige Pumpengehäuse auf der Seite der Laufradöffnung mit einem Ansaugschacht versehen ist, der sich von dem Pumpengehäuse ausgehend nach oben erstreckt und der die Laufradöffnung domförmig umgibt. Die Pumpenwelle ist in einem vorgegebenen Abstand zum Pumpengehäuse dicht durch den Ansaugschacht geführt, wobei der Ansaugschacht wenigstens eine Einlassöffnung für die zu pumpende Biomasse aufweist, die in der Funktionsstellung der Förderpumpe in Schachtrichtung gesehen oberhalb der Laufradöffnung liegt.

Mit einer derartigen erfindungsgemäßen Ausbildung der Förderpumpe für eine Biogasanlage haben sich im praktischen Betrieb hervorragende Pumpergebnisse ergeben, ohne jegliche Unterbrechung des Förderstroms der Pumpe. Wie die anmelderseitigen Versuche ferner gezeigt haben, kann insbesondere aufgrund des Ansaugschachtes der erfindungsgemäßen Förderpumpe sichergestellt werden, dass im Ansaugschacht und damit im Bereich oberhalb der Laufradöffnung bzw. dem Laufrad eine Art Separierung des Gases von der zu pumpenden Biomasse stattfindet, so dass im wesentlichen Biomasseflüssigkeit über die Laufradöffnung in das Pumpengehäuse gelangt und von dort weitergepumpt wird, während das Gas im Ansaugschacht nach oben steigt und dort z. B. über geeignete Maßnahmen, wie z. B. einen Absaugstutzen, abgesaugt und z. B. wieder dem Fermenterbehälter zugeführt werden kann.

Der Ansaugschacht kann dabei grundsätzlich integral mit dem Pumpengehäuse ausgebildet sein. Besonders bevorzugt und im Hinblick auf eine einfache Montage und Demontage, insbesondere auch im Falle von Reparaturarbeiten, ist jedoch eine Ausführungsform, bei der der Ansaugschacht als separates Bauteil ausgebildet ist, der am Pumpengehäuse um die Laufradöffnung herum befestigt ist. Vorteilhafterweise erfolgt hier die Befestigung des Ansaugschachtes am Pumpengehäuse über einen am pumpengehäuseseitigen Schachtende des Ansaugschachtes ausgebildeten Befestigungsflansch. Die Befestigung erfolgt vorzugsweise an einem eine flächige Anlageverbindung ausbildenden, pumpengehäuseseitigen Gegenelement, der z. B. durch einen ebenen Ringflächenbereich ausgebildet sein kann. Zur gas- und flüssigkeitsdichten Befestigung ist vorzugsweise eine Schraubflanschverbindung in Verbindung mit der Anordnung eines Dichtmittels vorgesehen. Ein besonders kompakter Aufbau ergibt sich mit einem Ansaugschacht, der pumpengehäuseseitig an einem Umfangsrandbereich der Laufradöffnung festgelegt ist.

Der Ansaugschacht selbst ist rohrförmig ausgebildet und kann jegliche Querschnittsform aufweisen, so z. B. auch eine eckige Querschnittsgeometrie aufweisen. auch in Längsrichtung des Ansaugschachtes gesehen sind unterschiedliche Ausgestaltungen grundsätzlich möglich, so z. B. ein sich verjüngender Schacht. Besonders einfach und preiswert ist ein Ansaugschacht, der eine über die gesamte Längserstreckung gleiche, kreiszylindrische Rohrgeometrie aufweist und der auf der der Schachtöffnung gegenüberliegenden Seite einen vorzugsweise ebenen, geradflächigen Schachtwandbereich als Stirnwandbereich aufweist, durch den die Pumpenwelle gasdicht hindurchgeführt ist. Dazu weist der stirnseitige Schachtwandbereich eine Schacht-Durchgangsöffnung auf, durch die die Pumpenwelle in Verbindung mit einem Wellenlager gas- und flüssigkeitsdicht hindurchgeführt ist. Dieses Wellenlager und damit der stirnseitige Schachtwandbereich sind in einem vorgegebenen Abstand zum Pumpengehäuse in Schachtrichtung gesehen oberhalb der Laufradöffnung angeordnet. Bevorzugt ist eine Ausgestaltung, bei der die Pumpenwelle in einem sog. Wellenrohr, das ortsfest angeordnet ist, aufgenommen ist, um keine Zugänglichkeit zu drehbaren Teilen zu haben. Dieses Wellenrohr kann in einer einfachen Ausführungsform einteilig ausgebildet sein und so gasdicht durch den Ausgangsschacht durchgeführt sein, dass der Ausgangsschacht im Bereich der Schacht-Durchgangsöffnung z. B. mittels einer Schweißnaht mit dem Wellenrohr verbunden ist. Besonders bevorzugt ist in diesem Bereich eine lösbare Verbindung, bei der am Wellenrohr im Bereich der Schacht-Durchgangsöffnung ein Befestigungsflansch als Wellenlager angeordnet ist, der im montierten Zustand in einer flächigen Anlageverbindung an einem Ansaugschacht-Wandbereich um die Schacht-Durchgangsöffnung herum anlegt und mit dem Ansaugschacht gas- und flüssigkeitsdicht verbunden ist. Als Befestigungsmittel eignen sich insbesondere lösbare Schraubverbindungen, wobei zudem zwischen Befestigungsflansch und Ansaugschacht-Wandbereich ein Dichtmittel anzuordnen ist. Die Anbindung am Ansaugschacht kann dabei außerhalb und/oder innerhalb des Ansaugschachtes erfolgen.

Gemäß einer konkreten, bevorzugten Ausgestaltung, die sehr einfach montierbar und auch demontierbar ist, ist das Wellenrohr zweiteilig ausgebildet und weist ein außerhalb des Ansaugschachtes liegendes, äußeres Wellenrohr sowie ein innerhalb des Ansaugschachtes liegendes, inneres Wellenrohr auf. Das Wellenlager weist weiter einen außerhalb des Ansaugschachtes liegenden, äußeren Befestigungsflansch als Bestandteil des äußeren Wellenrohres und einen innerhalb des Ansaugschachtes liegenden, inneren Befestigungsflansch als Bestandteil des inneren Wellenrohres auf. Die beiden Befestigungsflansche liegen dann im montierten Zustand auf gegenüberliegenden Seiten der Schacht-Durchgangsöffnung in einer flächigen Anlageverbindung am Ansaugschacht an und sind dort vorzugsweise festgelegt, insbesondere unter Zwischenschaltung eines Dichtmittels mittels einer lösbaren Schraubverbindung dicht festgelegt.

Der innere Befestigungsflansch kann bei einer derartigen Ausführungsform einen größeren Durchmesser aufweisen als der äußere Befestigungsflansch, wobei dann die Anbindung des inneren Befestigungsflansches am Ansaugschacht-Wandbereich im über den Durchmesser des äußeren Befestigungsflansches überstehenden Bereich erfolgt, so dass hier lediglich eine Verbindung zwischen innerem Befestigungsflansch und Ansaugschacht erfolgt. Auch hier kann selbstverständlich, z. B. in Verbindung mit einer Schraubverbindung ein Dichtmittel vorgesehen sein. In äquivalenter Weise kann diese Befestigungsanordnung auch in umgekehrter Weise ausgebildet sein, d. h. der äußere Befestigungsflansch weist einen größeren Durchmesser auf als der innere Befestigungsflansch. Daneben kann zusätzlich oder aber auch alternativ eine Befestigung vorgesehen sein, bei der der äußere Befestigungsflansch mittels einer Schraubverbindung mit dem inneren Befestigungsflansch verschraubt ist, vorzugsweise unter Verklemmung eines Ansaugschacht-Wandbereiches sowie unter Zwischenschaltung entsprechender Dichtmittel.

Gemäß einer weiteren bevorzugten Ausgestaltung weist der rohrförmige Ansaugschacht in einem Seitenwandbereich ein im wesentlichen senkrecht zur Schachtachse ausgerichtetes und sich von der Schachteinlassöffnung wegstreckendes Ansaug-Rohrstück auf, über das Biomasse z. B. über eine angeschlossene Rohrleitung vom Fermenterbehälter in den Ansaugschacht gelangt. Dieses Ansaug-Rohrstück ist vorzugsweise als zylindrischer Rohrstutzen ausgebildet, vorzugsweise als kreiszylindrischer Rohrstutzen, kann jedoch auch andere Geometrien aufweisen. Das Ansaug-Rohrstück ist vorzugsweise mit dem Ansaugschacht verschweißt, wobei das Ansaug-Rohrstück ferner mittels einer Absperreinrichtung, z. B. einem Schieber oder dergleichen von der Biomassezufuhr abschaltbar sein kann.

Gemäß einer weiteren besonders bevorzugten Ausgestaltung kann an diesem Ansaug-Rohrstück, vorzugsweise an dessen in der Funktionsstellung höchsten Stelle, wenigstens eine vorzugsweise verschließbare Auslass- und/oder Einlassöffnung vorgesehen sein, die in einer besonders bevorzugten Ausführungsform als Gasauslassöffnung für das nach oben steigende Gas oder aber auch als Spülöffnung zur Spülung der Förderpumpe dient.

Gemäß einer weiteren besonders bevorzugten Ausgestaltung der Erfindung ist am Ansaugschacht selbst wenigstens eine vorzugsweise verschließbare Auslass- und/oder Einlassöffnung vorgesehen, die ebenfalls als Gasauslassöffnung und/oder als Spülöffnung dienen kann. Insbesondere in der besonders bevorzugten Funktion als Gasauslassöffnung ist es zweckmäßig, die Auslassöffnung in Schachtrichtung gesehen, von dem Pumpengehäuse weggerichtet, am oberen Schachtende auszubilden. An dieser Öffnung kann beispielsweise über einen dort angebrachten Anschlussstutzen, z. B. eine Gasleitung angebracht werden, die z. B. mit einer weiteren Pumpe versehen ist, um Gas aus dem Ansaugschacht heraus abzusaugen und bevorzugt wiederum in den Fermenterbehälter der Biogasanlage einzuleiten.

Die Schacht-Einlassöffnung ist vorzugsweise so dimensioniert und angeordnet, dass sich diese vom Pumpengehäuse ausgehend in Schachtachsenrichtung gesehen in einem vorgegebenen Abstand oberhalb des Pumpengehäuses einerseits und unterhalb des Durchgangsbereichs der Pumpenwelle durch den Ansaugschacht andererseits befindet. Gemäß einer bevorzugten konkreten Ausgestaltung erstreckt sich somit die Schacht-Einlassöffnung und damit das Anschluss-Rohrstück im wesentlichen über einen Großteil des gesamten Bereiches zwischen dem torusförmigen Pumpengehäuse einerseits und dem schachtseitigen Wellenlager bzw. Wellendurchführung andererseits, wodurch eine besonders effektive Trennung zwischen Gasphase einerseits und Biomasse-Flüssigkeitsphase andererseits erzielt werden kann, d. h. dass der Ansaugschacht somit hier insbesondere in Verbindung mit dem Ansaug-Rohrstück als eine Art Separator fungiert.

Das Pumpenlaufrad weist bevorzugt ein äußeres Laufradteil, das aus der Laufradöffnung des Pumpengehäuses herausragt und im Inneren des Ansaugschachtes koaxial mit der Pumpenwelle verbunden ist. Dieses äußere Laufradteil ist bevorzugt so angeordnet, dass es sich in Schachtachsenrichtung gesehen wenigstens mit einem Teilbereich auf Höhe der Schacht-Einlassöffnung befindet, wobei es sich vorzugsweise in einem unteren, mittleren Öffnungsbereich erstreckt. Das an das äußere Laufradteil anschließenden Wellenstück der Pumpenwelle erstreckt sich in Schachtachsenrichtung gesehen dagegen über die restliche Höhe des Einlassöffnungsbereiches.

Das äußere Laufrad ist gemäß einer besonders bevorzugten Ausgestaltung der Erfindung als äußere Laufradschnecke mit Schneckenwendeln ausgebildet, die bei einer Laufraddrehung Materialien erfassen und in die Laufradöffnung des Pumpengehäuses schieben und drängen. Bevorzugt ist hierzu die äußere Laufradschnecke teilweise von einem schalenförmigen Schneckentrog umfasst, der sich zwischen dem Anschlussbereich der Pumpenwelle an die äußere Laufradschnecke und dem Pumpengehäuse erstreckt. Dabei ist der Schneckentrog bevorzugt so gestaltet, dass der Schneckentrog in seinem Längsbereich, in dem die äußere Laufradschnecke hineindreht, einen relativ breiten Schneckentrogeingang bildet, während der Schneckentrog mit seinem Längsbereich, aus dem die äußere Laufradschnecke herausdreht, als Schneckentrogausgang den Schneckentrog gegenüber der äußeren Laufradschnecke weitgehend schließt und in diesem Längsbereich bevorzugt wenigstens eine sich über die Länge erstreckende sog. Schlagleiste zur Zerkleinerung von z. B. fasrigen Materialien vorgesehen sind. Alternativ zu einem derartigen Schneckentrog können aber auch zwischen dem Anschlussbereich der Pumpenwelle an der äußeren Laufradschnecke und dem Pumpengehäuse erstreckende Arme als Verbindungsstreben vorgesehen sein.

Mit einem derartigen, insbesondere außerhalb eines Fermenterbehälters der Biogasanlage trocken aufgestellten Förderpumpe, bei der die Schachtachse der Hochachsenrichtung entspricht und die Laufradöffnung in der Funktionsstellung oben, vorzugsweise in einer Horizontalebene liegt, lassen sich hervorragende Pumpergebnisse für die zu fördernde Biomassestoffe erzielen.

Die Erfindung wird nachfolgend anhand einer Zeichnung näher erläutert.

Es zeigen:
- Fig. 1: schematisch eine erfindungsgemäße Förderpumpe einer Biogasanlage in ihrer montierten Funktionsstellung,
- Fig. 2: eine schematische Schnittansicht entlang der Linie A-A der Fig. 1,
- Fig. 3: schematisch eine Prinzipskizze einer Biogasanlage mit einer erfindungsgemäßen Förderpumpe, und
- Fig. 4: schematisch eine Förderpumpe nach dem Stand der Technik.

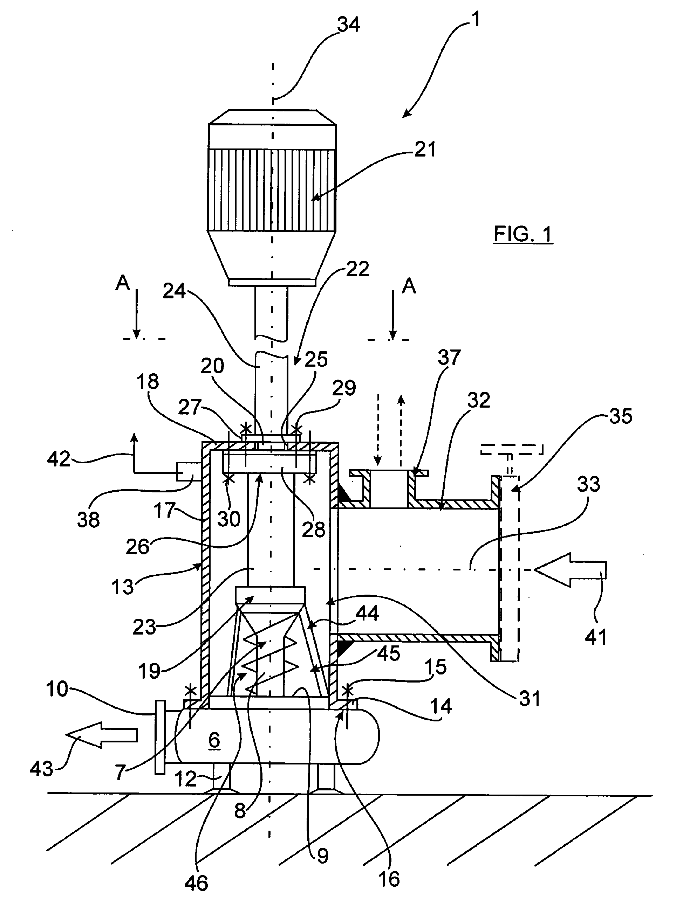

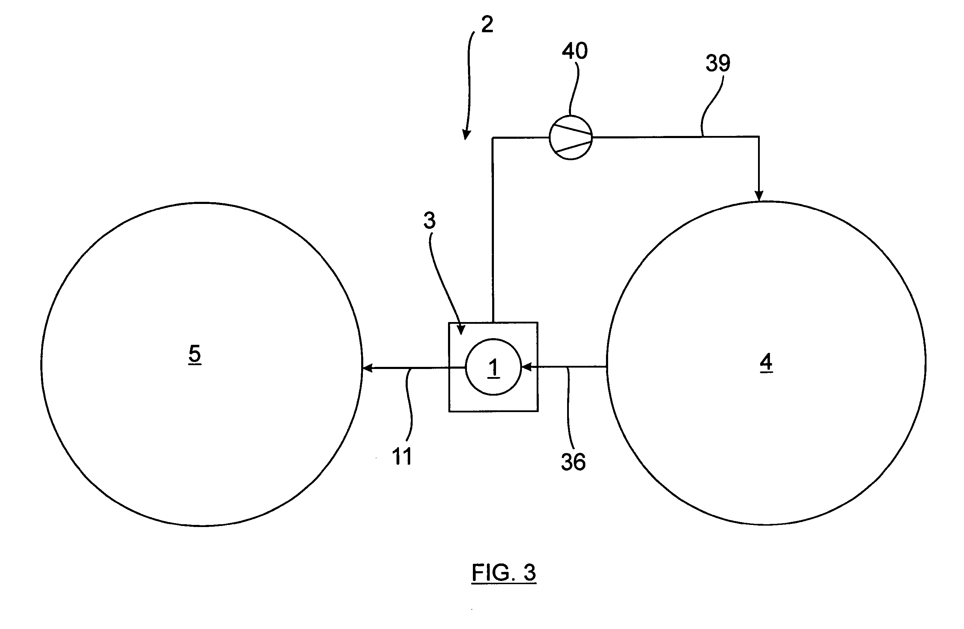

In der Fig. 1 ist schematisch eine Förderpumpe 1 gezeigt, wie sie beispielweise als Bestandteil einer in der Fig. 3 dargestellten Biogasanlage 2 zum Einsatz kommt. Eine oder mehrere derartige Förderpumpen 1 können als Bestandteil einer Pumpstation 3 hier beispielsweise dazu vorgesehen sein, aus einem Fermenter 4 der Biogasanlage 2 vergorene Biomasse in einen Nachfermenter 5 überzupumpen. Grundsätzlich ist die Förderpumpe 1 jedoch auch für andere Pumpvorgänge in der Biogasanlage einsetzbar.

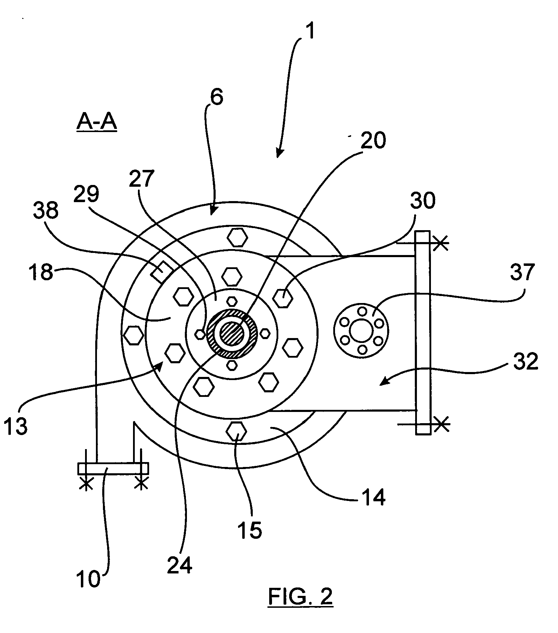

Wie dies der Fig. 1 in der Zusammenschau mit der Fig. 2 im Einzelnen entnommen werden kann, weist die Förderpumpe 1 ein torusförmiges Pumpengehäuse 6 auf, in dem ein hier nicht dargestelltes inneres Laufradteil eines Pumpenlaufrades 7 aufgenommen ist. Dieses Pumpenlaufrad 7 weist zudem eine äußere Laufradschnecke 8 auf, die aus einer dem Pumpeneingang bildenden Laufradöffnung 9 des Pumpengehäuses 6 herausragt, so dass die Biomasse bei einer Laufraddrehung in die Laufradöffnung 9 des Pumpengehäuses 6 gezogen und gedrängt wird.

Wie dies den Fig. 1 und 2 weiter entnommen werden kann, weist das Pumpengehäuse 6 einen in etwa tangentialen Pumpenausgang 10 auf, der beispielsweise über die in der Fig. 3 schematisch dargestellte Rohrleitung 11 mit dem Nachfermenter 5 der Biogasanlage 2 strömungsverbunden ist.

Das Pumpengehäuse 6 ist in der in der Fig. 1 gezeigten Funktionsstellung so ausgerichtet, dass die Laufradöffnung 9 nach oben weisend in etwa in einer horizontalen Ebene liegt, genauso wie der Korpus des Pumpengehäuses 6 selbst, wobei sich das Pumpengehäuse 6 über hier lediglich schematisch dargestellte Stützfüße 12 z. B. am Boden als Aufstandsfläche abstützt.

In der in der Fig. 1 gezeigten Funktionsstellung der Förderpumpe 1 liegt somit die Laufradöffnung 9 des Pumpengehäuses 6 oben und bildet somit eine oben ansaugende Pumpe aus.

Wie dies den Fig. 1 und 2, insbesondere der Darstellung der Fig. 1 weiter entnommen werden kann, ist auf das Pumpengehäuse 6 ein im Querschnitt in etwa kreiszylindrischer Ansaugschacht aufgesetzt, der sich von dem Pumpengehäuse 6 ausgehend nach oben, d. h. in Achsrichtung des Pumpenlaufrades 7 erstreckt und der die Laufradöffnung 9 domförmig umgibt, so dass sowohl die Laufradöffnung 9 als auch die äußere Laufradschnecke 8 mit einem vorgegebenen Abstand von den Schachtwänden vollständig im Innenraum des Ansaugschachtes 13 aufgenommen sind.

Der Ansaugschacht 13 weist am pumpengehäuseseitigen Schachtende einen Befestigungsflansch 14 auf, mittels dem der Ansaugschacht 13 am Pumpengehäuse 6 mittels einer Schraubverbindung 15 unter Zwischenschaltung eines hier nicht gezeigten Dichtmittels dicht, d. h. gas- und flüssigkeitsdicht befestigt ist. Die Festlegung erfolgt hier an einem Umfangsrandbereich 16 der Laufradöffnung 9, der so ausgebildet ist, dass der Befestigungsflansch 14 in einer flächigen Anlageverbindung an diesem Umfangsrandbereich 16 anliegt.

Der Ansaugschacht 13 weist auf der dem Befestigungsflansch 14 gegenüberliegenden Endseite eine im wesentlichen rechtwinklig zu der Seitenwand 17 verlaufende Stirnseitenwand 18 auf, durch die eine in einem Anschlussbereich 19 mit der äußeren Laufradschnecke 8 drehbewegungsübertragend verbundene Pumpenwelle 20 gas- und flüssigkeitsdicht zu einem Antriebsmotor 21 hindurchgeführt ist. Wie dies der Fig. 1 und der Fig. 2 entnommen werden kann, ist die Pumpenwelle 20 in einem zweiteiligen Wellenrohr 22 aufgenommen, das durch ein inneres Wellenrohrteil 23 und ein äußeres Wellenrohrteil 24 gebildet ist. Konkret ist hierbei die Pumpenwelle 20 durch eine in der Stirnseitenwand 18 ausgebildete Schacht-Durchgangsöffnung 25 hindurchgeführt, in dessen Bereich zudem ein Wellenlager 26 der Pumpenwelle 20 angeordnet und ausgebildet ist.

Dieses Wellenlager 26 besteht hier beispielhaft aus einem Befestigungsflansch 27 des äußeren Wellenrohres 24 und einem inneren Befestigungsflansch 28 des inneren Wellenrohres 23, die auf gegenüberliegenden Seiten der Schacht-Durchgangsöffnung 25 in einer flächigen Anlageverbindung an der Stirnseitenwand 18 des Ansaugschachtes 13 anliegen und dort mittels einer Schraubverbindung 29 miteinander verbunden sind, vorzugsweise unter Zwischenschaltung einer hier nicht dargestellten Dichtung. Zudem kann hier, wie dies lediglich schematisch und beispielhaft in der Fig. 1 dargestellt ist, der innere Befestigungsflansch 28 einen gegenüber dem Durchmesser des äußeren Befestigungsflansches 27 größeren Durchmesser aufweisen, so dass lediglich eine Schraubverbindung 30 zwischen dem Stirnseitenwandbereich 18 und dem dort in einer flächigen Anlageverbindung anliegenden inneren Befestigungsflansch 28 erfolgt.

Wie dies der Fig. 1 deutlich zu entnehmen ist, bestimmen die Längserstreckung der äußeren Laufradschnecke 8 und die Längserstreckung des inneren Wellenrohrs 23 somit im wesentlichen die Gesamtlänge des Ansaugschachtes 13, der in einem Seitenwandbereich eine relativ groß dimensionierte Einlassöffnung 31 aufweist, die sich im Querschnitt der Fig. 1 betrachtet von einem etwa mittleren Bereich der Erstreckungshöhe der äußeren Laufradschnecke 8 oberhalb der Laufradöffnung 9 aus gesehen bis in etwa unterhalb des Bereichs der schachtseitigen Wellendurchführung bzw. hier konkret des Wellenlagers 26 erstreckt. Randseitig ist an diese Einlassöffnung 31 ein hier beispielhaft kreiszylindrischer Ansaug-Rohrstutzen 32 angeschweißt, dessen Mittelachse 33 in etwa senkrecht zur schachtseitigen bzw. laufradseitigen Mittelachse 34 ausgerichtet ist.

Der Ansaug-Rohrstutzen 32 ist beispielsweise über einen hier lediglich schematisch und strichliert dargestellten Schieber 35 absperrbar mit einer vom Fermenter 4 kommenden Rohrleitung 36 (siehe Fig. 3) strömungsverbunden.

Am Ansaug-Rohrstutzen 32 ist hier ein Anschlussstutzen 37 vorgesehen, der z. B. als Spülöffnung oder aber auch als Anschlussstutzen zum Anschluss einer Gasleitung verwendet werden kann, um im Bereich des Ansaug-Rohrstutzens 32 anfallende Gase abziehen und z. B. dem Fermenter 4 wieder zuführen zu können. Insbesondere für letzteren Anwendungsfall ist deshalb der Anschlussstutzen 37 an der höchsten Stelle des Ansaug-Rohrstutzens 32 angeordnet.

Diese Spülmöglichkeit und diese Gasabzugsmöglichkeit ist in der Darstellung der Fig. 1 schematisch durch die beiden strichlierten Pfeile dargestellt.

Alternativ oder zusätzlich dazu kann auch am Ansaugschacht 13, an einem in der Funktionsstellung oberen, stirnseitenwandnahen Seitenwandbereich des Ansaugschachtes 13 ein Anschlussstutzen 38 vorgesehen sein, der ebenfalls wieder als Spülöffnung verwendet werden kann. Besonders bevorzugt ist hier jedoch eine Verwendung als Gasabzugsstutzen, an den, wie dies beispielhaft in der Fig. 3 dargestellt ist, eine Rohrleitung 39 in Verbindung mit einer Ansaugpumpe 40 angeschlossen werden kann, um das sich im oberen Innenraumbereich des Ansaugschachtes 13 sammelnde Biogas aus dem Ansaugschacht 13 abziehen und dem Fermenter 4 zuführen zu können.

Mit der vorliegenden Erfindung lässt sich somit eine relativ gasreiche Biomasse 41 aus dem Fermenter 4 ansaugen und über den Ansaug-Rohrstutzen 32 und die Einlassöffnung 31 in den Ansaugschacht 13 einbringen, in dem sich ein Teil der Gasphase von der Flüssigphase der eingebrachten Biomasse löst und nach oben steigt und sich in einem oberen Innenraumbereich des Ansaugschachtes 13 sammelt, während die Flüssigphase sich im wesentlichen im unteren Innenraumbereich des Ansaugschachtes 13 sammelt und dort von der äußeren Laufradschnecke 8 erfasst und über die Laufradöffnung 9 in das Pumpengehäuse 6 gedrängt wird, von wo es über den Pumpenausgang 10 ohne Betriebsstörungen z. B. in den Nachfermenter 5 gepumpt werden kann.

Wie dies der Fig. 1 zudem weiter entnommen werden kann, ist die äußere Laufradschnecke 8 teilweise von einem schalenförmigen Schneckentrog 44 umfasst, der sich zwischen dem Anschlussbereich 19 der Pumpenwelle 20 an die äußere Laufradschnecke 8 und dem Pumpengehäuse 6 erstreckt. Insbesondere bildet hier der Schneckentrog 44 in seinem Längsbereich, in den die äußere Laufradschnecke hineindreht, einen relativ breiten Schneckentrogeingang 45 aus, wobei die zugeordnete Schneckentrog-Eingangslängskante in einem relativ großen Abstand zur Schneckenumfangskante der äußeren Laufradschnecke verläuft. Dagegen schließt der Schneckentrog 44 mit seinem Längsbereich, aus dem die äußere Laufradschnecke 8 herausdreht, als Schneckentrogausgang 46 den Schneckentrog 44 gegenüber der äußeren Laufradschnecke weitgehend, wobei die zugeordnete Schneckentrog-Ausgangslängskante im geringeren Abstand zur Schneckenumfangskante der äußeren Laufradschnecke 8 verläuft und vorzugsweise hier nicht dargestellte Schlagleisten aufweist.

## Patentansprüche

1. Biogasanlagen-Förderpumpe zur Förderung pumpfähiger Biomasse in Verbindung mit einem Fermentationsprozess einer Biogasanlage zur Erzeugung von Biogas
mit einem torusförmigen Pumpengehäuse (6),
mit einem koaxial zum Pumpengehäuse (6) liegenden Pumpenlaufrad (7), das mit einem inneren Laufradteil in dem Pumpengehäuse (6) aufgenommen ist,
mit einer den Pumpeneingang bildenden Laufradöffnung (9) des Pumpengehäuses (6), wobei die Biomasse bei einer Laufraddrehung in die Laufradöffnung (9) des Pumpengehäuses (6) gezogen wird,
mit einem etwa tangentialen Pumpenausgang (10) am torusförmigen Pumpengehäuse (6), und
mit einer antreibbaren Pumpenwelle (20), die mit dem Pumpenlaufrad (7) verbunden ist,
**dadurch gekennzeichnet,**
**dass** die Laufradöffnung (9) des Pumpengehäuses (6) in der Funktionsstellung der Förderpumpe (1) nach oben weist,
**dass** das torusförmige Pumpengehäuse (6) auf der Seite der Laufradöffnung (9) mit einem Ansaugschacht (13) versehen ist, der sich von dem Pumpengehäuse (6) ausgehend nach oben erstreckt und der die Laufradöffnung (9) domförmig umgibt,
**dass** die Pumpenwelle (20) im vorgegebenen Abstand zum Pumpengehäuse (6) dicht durch eine Wand (18) des Ansaugschachtes (13) geführt ist, und
**dass** der Ansaugschacht (13) wenigstens eine Einlassöffnung (31) für die zu pumpende Biomasse (41) aufweist, die in der Funktionsstellung der Förderpumpe (1) in Schachtrichtung gesehen oberhalb der Laufradöffnung (9) liegt.

2. Förderpumpe nach Anspruch 1, **dadurch gekennzeichnet, dass** der Ansaugschacht (13) als separates Bauteil ausgebildet ist, der am Pumpengehäuse (6) um die Laufradöffnung (9) herum befestigt ist.

3. Förderpumpe nach Anspruch 2, **dadurch gekennzeichnet, dass** der Ansaugschacht (13) am pumpengehäuseseitigen Schachtende einen Befestigungsflansch (14) aufweist, mittels dem der Ansaugschacht (13) an einem Umfangsrandbereich (16) der Laufradöffnung (9) am Pumpengehäuse (6) gas- und flüssigkeitsdicht befestigt ist, insbesondere mittels einer Schraubverbindung (15) befestigt ist.

4. Förderpumpe nach einem der Ansprüche 1 bis 3, **dadurch gekennzeichnet, dass** der Ansaugschacht (13) rohrförmig, insbesondere kreiszylinderrohrförmig ausgebildet ist, mit einem der Schachtöffnung gegenüberliegenden, stirnseitigen Schachtwandbereich (18), durch den die Pumpenwelle (20) dicht hindurchgeführt ist.

5. Förderpumpe nach Anspruch 4, **dadurch gekennzeichnet, dass** der stirnseitige Schachtwandbereich (18) eine Schacht-Durchgangsöffnung (25) für die Pumpenwelle (20) aufweist.

6. Förderpumpe nach Anspruch 5, **dadurch gekennzeichnet, dass** im Bereich der Schacht-Durchgangsöffnung (25) ein Wellenlager (26) der Pumpenwelle (29) im vorgegebenen Abstand zum Pumpengehäuse (6) angeordnet ist.

7. Förderpumpe nach Anspruch 6, **dadurch gekennzeichnet, dass** die Pumpenwelle (20) wenigstens bereichsweise in einem ein- oder mehrteiligen Wellenrohr (22) als Schutzrohr aufgenommen ist.

8. Förderpumpe nach Anspruch 7, **dadurch gekennzeichnet, dass** am Wellenrohr (23, 24) im Bereich der Schacht-Durchgangsöffnung (25) ein Befestigungsflansch (27, 28) als Wellenlager angeordnet ist, der im montierten Zustand in einer flächigen Anlageverbindung an einen Ansaugschacht-Wandbereich (18) um die Schacht-Durchgangsöffnung (25) herum anliegt und mit dem Ansaugschacht (13) gas- und flüssigkeitsdicht verbunden ist, insbesondere unter Zwischenschaltung eines Dichtmittels mittels einer lösbaren Schraubverbindung (29, 30) dicht verbunden ist.

9. Förderpumpe nach Anspruch 7 oder Anspruch 8, **dadurch gekennzeichnet,**
**dass** das Wellenrohr (22) zweiteilig ausgebildet ist und ein außerhalb des Ansaugschachtes (13) liegendes, äußeres Wellenrohr (24) sowie ein innerhalb des Ansaugschachtes (13) liegendes, inneres Wellenrohr (23) aufweist, und
**dass** das Wellenlager (26) einen außerhalb des Ansaugschachtes (13) liegenden, äußeren Befestigungsflansch (27) als Bestandteil des äußeren Wellenrohres (24) und einen innerhalb des Ansaugschachtes (13) liegenden, inneren Befestigungsflansch (28) als Bestandteil des inneren Wellenrohres (23) aufweist, die auf gegenüberliegenden Seiten der Schacht-Durchgangsöffnung (25) in einer flächigen Anlageverbindung am Ansaugschacht (13) anliegen und vorzugsweise dort festgelegt, insbesondere unter Zwischenschaltung eines Dichtmittels mittels einer lösbaren Schraubverbindung dicht festgelegt sind.

10. Förderpumpe nach Anspruch 9, **dadurch gekennzeichnet, dass** der innere Befestigungsflansch (28) einen größeren Durchmesser aufweist als der äußere Befestigungsflansch (27) und mit dem Ansaugschacht (13) mittels einer Schraubverbindung unter Zwischenschaltung eines Dichtmittels verschraubt ist.

11. Förderpumpe nach Anspruch 9 oder Anspruch 10, **dadurch gekennzeichnet, dass** der äußere Befestigungsflansch (27) mittels einer Schraubverbindung (29) mit dem inneren Befestigungsflansch (28) verschraubt ist.

12. Förderpumpe nach einem der Ansprüche 1 bis 11, **dadurch gekennzeichnet, dass** der rohrförmige Ansaugschacht (13) in einem Seitenwandbereich (17) ein im wesentlichen senkrecht zur Schachtachse (34) ausgerichtetes und sich von der Schacht-Einlassöffnung (31) wegerstreckendes Ansaug-Rohrstück (32) aufweist, über das Biomasse (41) in den Ansaugschacht gelangt.

13. Förderpumpe nach Anspruch 12, **dadurch gekennzeichnet,**
**dass** das Ansaug-Rohrstück (32) als zylindrischer Rohrstutzen ausgebildet ist, der mit dem Ansaugschacht (13) verschweißt ist, und
**dass** das Ansaug-Rohrstück (32) mittels einer Absperreinrichtung (35) von der Biomassezufuhr abschaltbar ist.

14. Förderpumpe nach Anspruch 12 oder Anspruch 13, **dadurch gekennzeichnet, dass** am Ansaug-Rohrstück (32) wenigstens eine vorzugsweise verschließbare Auslass- und/oder Einlassöffnung (37) vorgesehen ist, vorzugsweise als Gasauslassöffnung und/oder Spülöffnung.

15. Förderpumpe nach einem der Ansprüche 1 bis 14, **dadurch gekennzeichnet, dass** am Ansaugschacht (13) in Schachtrichtung, von dem Pumpengehäuse (6) weggerichtet, am oberen Schachtende wenigstens eine vorzugsweise verschließbare Auslass- und/oder Einlassöffnung (38) vorgesehen ist, vorzugsweise als Gasauslassöffnung und/oder Spülöffnung.

16. Förderpumpe nach Anspruch 15 oder Anspruch 16, **dadurch gekennzeichnet, dass** an die Auslass- und/oder Einlassöffnung eine Leitung (39), vorzugsweise an einen dort angeordneten Anschlussstutzen (38), angeschlossen ist.

17. Förderpumpe nach Anspruch 16, **dadurch gekennzeichnet, dass** die Leitung (39) für eine Gasrückführung in einen Fermenterbehälter (4) der Biogasanlage (2) mündet.

18. Förderpumpe nach einem der Ansprüche 1 bis 17, **dadurch gekennzeichnet, dass** die Schacht-Einlassöffnung (31) so dimensioniert und angeordnet ist, dass sich diese vom Pumpengehäuse (6) ausgehend in Schachtachsenrichtung (34) gesehen in einem vorgegebenen Abstand oberhalb des Pumpengehäuses (6) und unterhalb des Durchgangsbereiches der Pumpenwelle (20) durch den Ansaugschacht (13) befindet.

19. Förderpumpe nach einem der Ansprüche 1 bis 18, **dadurch gekennzeichnet, dass** das Pumpenlaufrad ein äußeres Laufradteil (8) aufweist, das aus der Laufradöffnung (9) des Pumpengehäuses (6) herausragt und im Inneren des Ansaugschachtes (13) koaxial mit der Pumpenwelle (20) verbunden ist.

20. Förderpumpe nach Anspruch 18 und Anspruch 19, **dadurch gekennzeichnet,**
**dass** sich das äußere Laufradteil (8) in Schachtachsenrichtung (34) gesehen wenigstens mit einem Teilbereich auf Höhe der Schacht-Einlassöffnung (31) befindet, sich vorzugsweise bis in einen unteren mittleren Öffnungsbereich erstreckt, und
**dass** sich das an das äußere Laufradteil (8) anschließende Wellenrohr (23) der Pumpenwelle (20) in Schachtachsenrichtung (34) gesehen über die restliche Höhe des Einlassöffnungsbereiches erstreckt.

21. Förderpumpe nach Anspruch 19 oder Anspruch 20, **dadurch gekennzeichnet, dass** das äußere Laufradteil als äußere Laufradschnecke (8) ausgebildet ist, die bei einer Laufraddrehung Materialien erfasst und in die Laufradöffnung (9) des Pumpengehäuses (6) zieht und drängt.

22. Förderpumpe nach Anspruch 21, **dadurch gekennzeichnet, dass** die äußere Laufradschnecke (8) teilweise von einem schalenförmigen Schneckentrog (44) umfasst ist, der sich zwischen dem Anschlussbereich (19) der Pumpenwelle (20) an die äußere Laufradschnecke (8) und dem Pumpengehäuse (6) erstreckt.

23. Förderpumpe nach Anspruch 22, **dadurch gekennzeichnet,**
**dass** der Schneckentrog (44) in seinem Längsbereich, in den die äußere Laufradschnecke (8) hineindreht, einen relativ breiten Schneckentrogeingang (45) bildet, wobei die zugeordnete Schneckentrog-Eingangslängskante in einem relativ großen Abstand zur Schneckenumfangskante der äußeren Laufradschnecke (8) verläuft, und
**dass** der Schneckentrog (44) mit seinem Längsbereich, aus dem die äußere Laufradschnecke (8) herausdreht, als Schneckentrogausgang (46) den Schneckentrog (44) gegenüber der äußeren Laufradschnecke (8) weitgehend schließt, wobei die zugeordnete Schneckentrog-Ausgangslängskante in geringem Abstand zur Schneckenumfangskante der äußeren Laufradschnecke (8) verläuft.

24. Förderpumpe nach einem der Ansprüche 1 bis 23, **dadurch gekennzeichnet, dass** die Förderpumpe (1) außerhalb eines Fermenterbehälters (4) der Biogasanlage (2) trocken aufgestellt ist, wobei die Schachtachse (34) der Hochachsenrichtung entspricht dergestalt, dass mittels der oben liegenden Laufradöffnung (9) eine oben ansaugende Förderpumpe (1) ausgebildet ist.
